# EUROPÄISCHE PATENTSCHRIFT

(11) **EP 1 570 026 B1**
(45) Veröffentlichungstag und Bekanntmachung des Hinweises auf die Patenterteilung: **24.05.2006**
(21) Anmeldenummer: 03812575.3
(22) Anmeldetag: 02.08.2003
(51) Int. Cl.: C10B 43/08, C10K 1/06, F28G 9/00, F23J 15/06

(54) **KOKSOFENGASK HLER**
COOLING DEVICE FOR COKE-OVEN GAS
APPAREIL DE REFROIDISSEMENT POUR GAZ DE FOUR A COKE

(30) Priorität: 11.12.2002 DE 10258066
(43) Veröffentlichungstag der Anmeldung: 07.09.2005
(73) Patentinhaber: Uhde GmbH, 44141 Dortmund (DE)
(72) Erfinder: THIELERT, Holger, 44379 Dortmund (DE)
(74) Vertreter: Albrecht, Rainer Harald
(86) Internationale Anmeldenummer: PCT/EP2003/008580
(87) Internationale Veröffentlichungsnummer: WO 2004/053023

(56) Entgegenhaltungen:
- WO-A-85/03339
- BE-A- 785 340
- DE-B- 1 028 579
- US-A- 4 340 572

## Beschreibung

Die Erfindung betrifft einen Gaskühler für Koksofengas, das kondensierende Inhaltsstoffe enthält, mit
einem von Koksofengas durchströmten Gaskanal,
von einem Kühlmedium durchströmten Wärmetauscherelementen innerhalb des Gaskanals und
einer Berieselungsvorrichtung oberhalb der Wärmetauscherelemente,
wobei die gasseitige Wärmetauscherfläche der Wärmetauscherelemente mit Flüssigkeit benetzt ist, die durch die Berieselungsvorrichtung zugeführt wird.

Nach dem Stand der Technik werden zur Kühlung von Koksofengas Querrohrgaskühler eingesetzt. Beim Betrieb solcher Kühler besteht das Problem, dass im Koksofengas enthaltene Inhaltsstoffe, insbesondere Teer oder Naphthalin, kondensieren, sich an den gasseitigen Wärmetauscherflächen ablagern und damit die Wärmeübertragung verschlechtern. Zur Reduzierung gasseitiger Ablagerungen werden die gasseitigen Wärmeübertragungsflächen des Querrohrgaskühlers mit Wasser berieselt, so dass sich auf den Flächen ein Wasserfilm ausbildet, der aus dem Koksofengas kondensierende Inhaltsstoffe abtransportiert. Die beschriebene Vorrichtung weist jedoch mehrere Nachteile auf. Die Berieselung von Querrohren gelingt nicht vollständig, da der sich auf der gasseitigen Wärmeübertragungsfläche ausbildende Wasserfilm im unteren Bereich der Querrohre aufreißt und das Wasser von dort aus abtropft oder abfließt. Dadurch liegt an der Unterseite der Querrohre kein geschlossener Wasserfilm vor, der einen ablagerungsfreien Abtransport ausgeschiedener Inhaltsstoffe erlaubt. Im Betrieb beobachtet man regelmäßig eine Verschmutzung an der Unterseite der Querrohre. Die erforderliche Reinigung der Querrohre ist aufwändig und führt zu einem Stillstand des Kühlers während des gesamten Reinigungsvorganges. Bei einer starken Verschmutzung der Rohre, welche durch Reinigungsvorgänge nicht entfernt werden kann, müssen die Rohre mit großem Aufwand aus dem Gaskanal entfernt und durch neue Rohre ersetzt werden. Dies verursacht hohe Kosten und ist ebenfalls mit einer langen Stillstandszeit des Kühlers verbunden.

Ebenfalls bekannt aus dem Stand der Technik und offenbart in der WO 85/03339 ist ein Gaskühler mit als Külplatten ausgebildeten Wärmetauscherelementen.

Der Erfindung liegt die Aufgabe zugrunde, einen Koksofengaskühler mit den eingangs beschriebenen Merkmalen anzugeben, der nur eine geringe Verschmutzungsneigung aufweist, eine schnelle Reinigung erlaubt und im seltenen Falle einer nicht durch Reinigung entfernbaren Verschmutzung einen schnellen Austausch der Wärmetauscherelemente ermöglicht.

Erfindungsgemäß wird die Aufgabe durch die Kennzeichnenden Merkmale des Anspruchs 1 gelöst.

Diese Lösung hat gegenüber dem Stand der Technik deutliche Vorteile. Die Berieselung der Kühlplatten mit Wasser hat aufgrund der günstigen Geometrie einen geschlossenen Wasserfilm auf den gasseitigen Wärmeübertragungsflächen zur Folge, der bis zum unteren Ende der Kühlplatten nicht aufreißt und daher die Kühlplatten vollständig benetzt. Dadurch wird die Ablagerung von ausgeschiedenen Inhaltsstoffen an den Wärmeübertragungsflächen wesentlich verringert.

Das Wärmetauscherpaket kann in einem vertikalen Abschnitt des Gaskanals angeordnet sein, so dass das Koksofengas das Wärmetauscherpaket im Gleich- oder Gegenstrom zu dem an den Wärmetauscherflächen ablaufenden Flüssigkeitsfilm durchströmt.

Alternativ kann das Wärmetauscherpaket in einem horizontalen Abschnitt des Gaskanals angeordnet sein, so dass das Koksofengas das Wärmetauscherpaket im Querstrom zu dem an den Wärmetauscherflächen ablaufenden Flüssigkeitsfilm durchströmt.

Zusätzlich ist das Wärmetauscherpaket als Austauscheinheit seitlich in den Gaskanal einsetzbar. Dies hat weitere beachtliche Vorteile zur Folge. Die Reinigung des Wärmetauscherpakets verursacht nur einen geringen Aufwand, da dieses zur Reinigung aus dem Koksofengaskühler entfernt werden kann und dann besser zugänglich ist. Es ist auch möglich, das verschmutzte Wärmetauscherpaket gegen ein unverschmutztes Wärmetauscherpaket auszutauschen und nach erfolgter Reinigung erst bei der nächsten erforderlichen Reinigungsprozedur wieder einzusetzen. Hierdurch wird die durch eine Reinigung des Wärmetauscherpakets hervorgerufene Dauer des Stillstands des Koksofengaskühlers deutlich reduziert. Weiterhin ist im Falle einer sehr selten auftretenden z.B. durch eine Betriebsstörung der Berieselungsvorrichtung hervorgerufenen, starken Verschmutzung der Wärmeübertragungsflächen, welche durch Reinigungsvorgänge nicht entfernt kann, ein sehr leichter Ersatz des Wärmtauscherpakets möglich, der ebenfalls vergleichsweise niedrige Kosten verursacht und nur eine kurze Stillstandszeit zur Folge hat.

Die Berieselungsvorrichtung ist vorzugsweise fest in dem Gaskanal installiert.

Im Folgenden wird die Erfindung anhand einer lediglich ein Ausführungsbeispiel darstellenden Zeichnung erläutert. Es zeigen schematisch:
- Fig. 1: einen Querschnitt durch ein Querrohr eines Querrohrgaskühlers, welcher nach dem Stand der Technik zur Kühlung von Koksofengasen eingesetzt wird,
- Fig. 2: einen Ausschnitt aus dem erfindungsgemäßen Koksofengaskühler,
- Fig. 3: eine Gesamtdarstellung des erfindungsgemäßen Koksofengaskühlers mit mehrfacher Anordnung der Wärme- tauscherpakete in einem vertikal ausgerichteten Gaskanal.

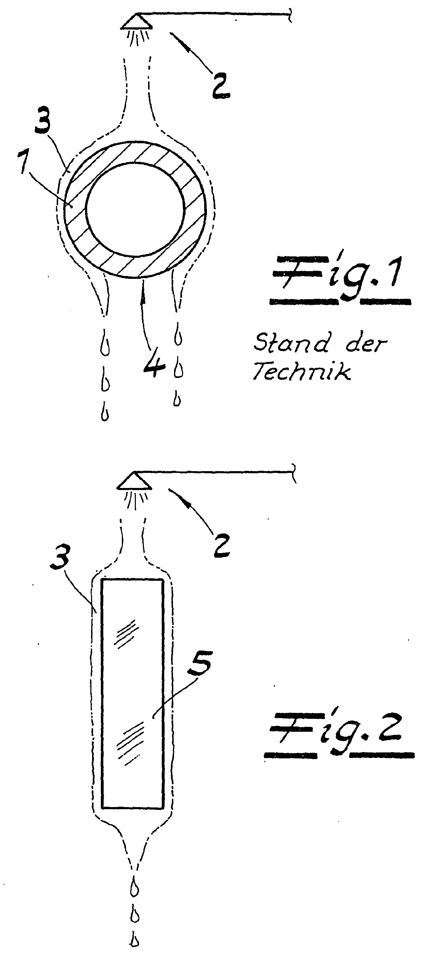

In Fig. 1 ist das von einem Kühlmedium durchströmte Querrohr 1 eines Querrohrgaskühlers dargestellt, welcher nach dem Stand der Technik zur Kühlung von Koksofengasen Verwendung findet. Mit Hilfe einer Berieselungsvorrichtung 2 erfolgt eine Berieselung des Querrohrs 1 mit Wasser, so dass sich ein der Geometrie des Querrohrs 1 entsprechender Wasserfilm 3 ausbildet. Dieser reißt im unteren Bereich des Querrohrs 1 auf und umschließt daher das Querrohr 1 nicht vollständig. Die Querrohrunterseite 4 ist nicht vom Wasserfilm 3 benetzt, und es kommt dort aufgrund der Kondensation von im Koksofengas enthaltenen Inhaltsstoffen, insbesondere Teer oder Naphthalin, zu einer Verschmutzung des Querrohrs 1.

Fig. 2 zeigt einen Ausschnitt aus dem erfindungsgemäßen Koksofengaskühler, bei dem die Wärmetauscherelemente als Kühlplatten 5 ausgebildet sind. Die Kühlplatten 5 sind vertikal ausgerichtet und von dem Kühlmedium durchströmbar. Der sich durch die Berieselung mittels der Berieselungsvorrichtung 2 bildende Wasserfilm 3 benetzt aufgrund der günstigen Plattengeometrie die gasseitigen Wärmeübertragungsflächen vollständig, so dass die aus dem Koksofengas, z. B. durch Kondensation, ausgeschiedenen Inhaltsstoffe mit dem Wasserfilm 3 abtransportiert werden und die Wärmeübertragungsflächen nicht verschmutzen.

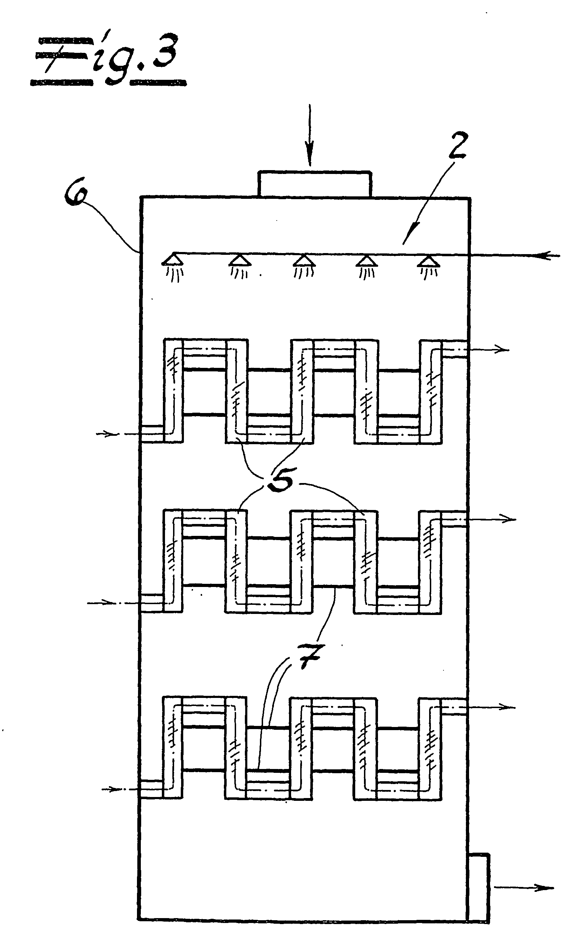

Fig. 3 zeigt die vollständige Darstellung des Gaskühlers für Koksofengas, das kondensierende Inhaltsstoffe enthält, mit einem von Koksofengas durchströmten Gaskanal 6, von einem Kühlmedium durchströmten Wärmetauscherelementen innerhalb des Gaskanals 6 und einer Berieselungsvorrichtung 2 oberhalb der Wärmetauscherelemente, wobei die gasseitige Wärmetauscherfläche der Wärmetauscherelemente mit Wasser benetzt ist, das durch die Berieselungsvorrichtung 2 zugeführt wird. Erfindungsgemäß sind die Wärmetauscherelemente als Kühlplatten 5 ausgebildet, die von dem Kühlmedium durchströmbar sind und mit kanalbildenden Abstandshaltern 7 zu mindestens einem Wärmetauscherpaket zusammengefasst sind. Die Wärmetauscherpakete sind mit vertikaler Ausrichtung der Kühlplatten 5 im Gaskanal 6 angeordnet, wobei die von den Abstandshaltern 7 gebildeten Gaskanäle oberseitig von dem aus der Berieselungsvorrichtung 2 austretenden Wasser beaufschlagt und von dem Koksofengas durchströmt sind. Die Wärmetauscherpakete sind als Austauscheinheit seitlich in den Gaskanal 6 einsetzbar. In dem in Fig. 3 dargestellten Beispiel ist der Gaskanal 6 vertikal ausgerichtet.

## Patentansprüche

1. Gaskühler für Koksofengas, das kondensierende Inhaltsstoffe enthält, mit
einem von Koksofengas durchströmten Gaskanal (6) und
von einem Kühlmedium durchströmten Kühlplatten (5), die mit kanalbildenden Abstandshaltern (7) zu mindestens einem Wärmetauscherpaket zusammengefasst sind,
wobei das Wärmetauscherpaket mit vertikaler Ausrichtung der Kühlplatten (5) im Gaskanal (6) angeordnet ist sowie oberhalb des Wärmetauscherpaketes eine Berieselungsvorrichtung (2) vorgesehen ist, **dadurch gekenn-zeichnet, dass** die von den Abstandshaltern (7) gebildeten Gaskanäle von dem Koksofengas durchströmt sowie von der aus der Berieselungsvorrichtung (2) austretenden Flüssigkeit beaufschlagt sind,
so dass die gasseitige Wärmetauscherfläche der Kühlplatten (5) mit Flüssigkeit benetzt ist und sich auf der Wärmetauscherfläche ein Flüssigkeitsfilm bildet, der aus dem Koksofengas kondensierende Inhaltsstoffe abtransportiert, und
dass das Wärmetauscherpaket als Austauscheinheit seitlich in den Gaskanal (6) einsetzbar ist.

2. Gaskühler nach Anspruch 1, **dadurch gekennzeichnet, dass** das Wärmetauscherpaket in einem vertikalen Abschnitt des Gaskanals (6) angeordnet ist und das Koksofengas das Wärmetauscherpaket im Gleich- oder Gegenstrom zu dem an den Wärmetauscherflächen ablaufenden Flüssigkeitsfilm durchströmt.

3. Gaskühler nach Anspruch 1, **dadurch gekennzeichnet, dass** das Wärmetauscherpaket in einem horizontalen Abschnitt des Gaskanals (6) angeordnet ist und das Koksofengas das Wärmetauscherpaket im Querstrom zu dem an den Wärmetauscherflächen ablaufenden Flüssigkeitsfilm durchströmt.

4. Gaskühler nach Anspruch 1 bis 3, **dadurch gekennzeichnet, dass** die Berieselungsvorrichtung (2) fest in dem Gaskanal (6) installiert ist.

## Claims

1. Gas cooler for coke oven gas which contains condensing constituents, comprising
a gas channel (6) through which coke oven gas is adapted to flow, and
cooling plates (5) through which coolant is adapted to flow, said cooling plates being combined with channel-forming spacers (7) to form at least one heat exchanger package,
wherein the heat exchanger package is arranged in the gas channel (6) with a vertical orientation of the cooling plates (5), and a sprinkler device (2) is provided above the heat exchanger package, **characterized in that** the gas channels formed by the spacers (7) through which the coke oven gas flows are acted upon by the liquid emerging from the sprinkler device (2),
so that the gas-side heat exchanger surface of the cooling plates (5) is wetted with liquid and a film of liquid forms on the heat exchanger surface, which film of liquid transports away constituents that condense out of the coke oven gas, and
**in that** the heat exchanger package is insertable laterally into the gas channel (6), as a replacement unit.

2. Gas cooler according to Claim 1, **characterized in that** the heat exchanger package is arranged in a vertical section of the gas channel (6), and the coke oven gas flows through the heat exchanger package in cocurrent or counter-current to the film of liquid running down the heat exchanger surfaces.

3. Gas cooler according to Claim 1, **characterized in that** the heat exchanger package is arranged in a horizontal section of the gas channel (6), and the coke oven gas flows through the heat exchanger package in cross-current to the film of liquid running down the heat exchanger surfaces.

4. Gas cooler according to Claims 1 to 3, **characterized in that** the sprinkler device (2) is fixedly installed in the gas channel (6).

## Revendications

1. Refroidisseur de gaz contenant des substances se condensant, comportant
un conduit de gaz (6) parcouru par du gaz de four à coke et
des plaques de refroidissement (5) parcourues par un fluide de refroidissement, qui sont réunies en au moins un module d'échangeur de chaleur, par des entretoises (7) formant des canaux,
dans lequel le module d'échangeur de chaleur est disposé dans le conduit de gaz (6), les plaques de refroidissement (5) étant orientées verticalement, et un dispositif d'arrosage (2) est prévu au-dessus du module d'échangeur de chaleur, **caractérisé en ce que** les canaux de gaz formés par les entretoises (7) sont parcourus par le gaz de four à coke et reçoivent le liquide sortant du dispositif d'arrosage (2),
de sorte que la surface d'échange thermique des plaques de refroidissement (5), située du côté du gaz, est mouillée de liquide et qu'il se forme sur la surface d'échange thermique un film de liquide qui emporte les substances se condensant du gaz de four à coke, et
que le module d'échangeur de chaleur peut être inséré latéralement dans le conduit de gaz (6) en tant que module remplaçable.

2. Refroidisseur de gaz selon la revendication 1, **caractérisé en ce que** le module d'échangeur de chaleur est disposé dans une section verticale du conduit de gaz (6) et que le gaz de four à coke parcourt le module d'échangeur de chaleur à contre-courant du film de liquide s'écoulant sur les surfaces d'échange thermique ou dans le même sens que celui-ci.

3. Refroidisseur de gaz selon la revendication 1, **caractérisé en ce que** le module d'échangeur de chaleur est disposé dans une section horizontale du conduit de gaz (6) et que le gaz de four à coke parcourt le module d'échangeur de chaleur transversalement au film de liquide s'écoulant sur les surfaces d'échange thermique.

4. Refroidisseur de gaz selon l'une des revendications 1 à 3, **caractérisé en ce que** le dispositif d'arrosage (2) est installé de manière fixe dans le conduit de gaz (6).
